# EUROPEAN PATENT APPLICATION

(11) **EP 1 408 075 A1**
(43) Date of publication of application: **14.04.2004**
(21) Application number: 03000531.8
(22) Date of filing: 09.01.2003
(51) Int. Cl.: C08K 5/13, F16F 15/02, H01L 41/193, G10K 11/00, G10K 11/165

(54) **Vibration damping material composition**

(30) Priority: 10.10.2002 JP 2002297375
(71) Applicant: Titecs Japan Corporation, Ohta-ku, Tokyo (JP)
(72) Inventor: Miura, Tadashi, Iruma-shi, Saitama (JP); Ito, Tetsuya, Machida-shi, Tokyo (JP)
(74) Representative: Müller-Boré & Partner Patentanwälte

(57) **Abstract**

It is an object of the present invention to provide a vibration damping composition having a high loss tangent (tanδ) and loss factor (η), and serviceable over a wide temperature range.

Provided is a vibration damping composition whose matrix material of organic polymer contains a vibration damping agent, and inorganic and/or organic filler, wherein the vibration damping agent is a phenol-based compound of limited steric hindrance which has a chemical composition free of a branched hydrocarbon group of 4 or more carbon atoms at each site adjacent to the hydroxyl group.

## Description

This invention relates to a vibration damping material composition, more particularly a vibration damping material composition capable of damping vibration and sound which is used as a starting material for, or in the form of coating material or others, in particular as sheet-shape formed article, for automobiles, buildings, various industrial machines and tools, home electronic appliances and medical equipment, among others.

Vibration damping and acoustic insulating materials have been strongly demanded to be lighter in the today's industrialized societies, on account of increasing needs for energy-saving and reduced environmental loads to protect the global environments.

However, the conventional polymer-based vibration damping material having vibration damping and acoustic insulation functions depends on the respective viscosity effect and friction effect each provided by the viscoelastic and inorganic filler components it contains, to achieve absorption of vibration by converting vibrational energy from the outside into thermal energy and dissipating the thermal energy into the atmosphere to damp the vibrational energy. Such a material is disadvantageous in that its vibration damping effect is limited only in a temperature range determined by glass transition temperature of the polymer compound as the constituent and damping time is difficult to arbitrarily control. Its another disadvantage is limitation of decreasing its weight.

Vibration damping materials with the polymer component incorporated with a variety of additives have been proposed as the ones which can solve these disadvantages. These include composites of a polymer with a lower-molecular-weight compound, e.g., triazole- or hindered phenol-based compound. For example, Japanese Patent Laid-open Application (Kokai) No.11-68190 discloses a vibration damping material comprising a chlorinated polyethylene incorporated with a benzothiazole-based compound, and Japanese Patent Laid-open Application (Kokai) No.2000-44818 discloses a vibration damping material comprising a basic polymer with a basic polar side chain incorporated with a hindered phenol-based compound.

However, a hindered phenol-based compound, which is proposed as a vibration damping agent, has a large alkyl group of butyl or higher, and hence shows limited interactions with a polymer as the matrix or inorganic filler. Therefore, it involves problems of reduced number of the agent/polymer interactions, and narrowed serviceable temperature region in which it exhibits high loss tangent (tanδ) or loss factor (η) as a property needed for vibration damping, because of the interactions being easily dissociated at high temperature. Moreover, there is much scope for improvement of durability which allows the vibration damping function to be exhibited for extended periods.

It is an object of the present invention to provide a damping material composition exhibiting better vibration damping functions than the conventional material containing a phenol-based compound, which has been proposed so far. More specifically, it has a higher loss tangent (tanδ) and loss factor (η), wider serviceable temperature range for each of the above properties, and higher durability which allows the composition to exhibit the vibration damping functions at a high level for extended periods.
It is another object of the present invention to provide a process for producing the same damping material composition.

The inventors of the present invention have found, after having extensively studied to solve the problems involved in the conventional damping material, that use of a specific phenol-based compound interacting with the damping material matrix of organic polymer more strongly than the phenol-based compound used for the conventional material allows the damping material composition to exhibit a higher loss tangent (tanδ) and loss factor (η) over a wider temperature range for each of these properties, and provides the vibration damping composition serviceable over a wider temperature range, achieving the present invention.

The present invention provides a vibration damping composition whose matrix material of organic polymer contains a vibration damping agent, wherein the vibration damping agent is a phenol-based compound represented by the general formula (I): 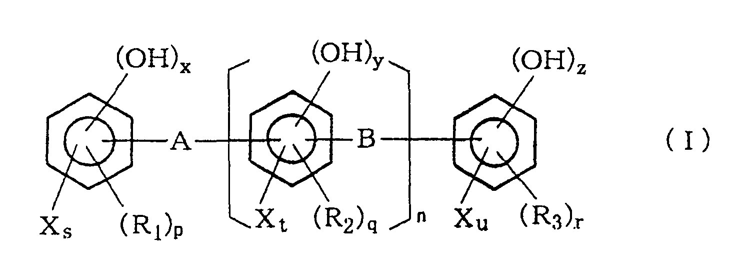 (wherein,
A is a chain hydrocarbon group of 1 to 3 carbon atoms, which may contain sulfur and/or oxygen atom, the above chain hydrocarbon group which contains an aromatic group, or alicyclic hydrocarbon group of 5 to 8 carbon atoms;
B is a chain hydrocarbon group of 1 to 3 carbon atoms, which may contain sulfur and/or oxygen atom;
A and B may be the same or different;
R₁, R₂ and R₃ are each a hydrocarbon, alkylol or aldehyde group of 1 to 3 carbon atoms, which may be the same or different; "p", "q" and "r" are each an integer of 0 to 3, which may be the same or different;
X is a halogen atom; "s", "t" and "u" are each 0 or 1, which may be the same or different;
"x", "y" and "z" are each an integer of 1 to 3, which may be the same or different; and
"n" is a numeral of 0 to 200).

The present invention also provides a vibration damping composition whose matrix material of organic polymer contains a vibration damping agent, and inorganic and/or organic filler, wherein the vibration damping agent is a phenol-based compound represented by the general formula (I): 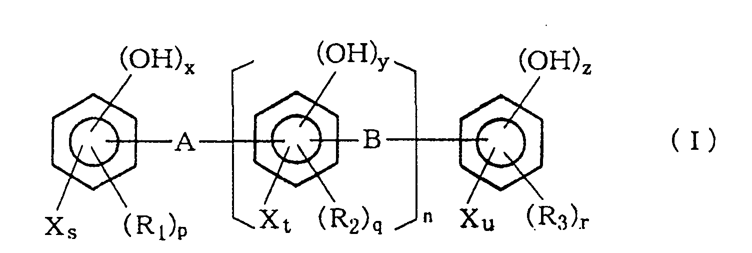 (wherein,
A is a chain hydrocarbon group of 1 to 3 carbon atoms, which may contain sulfur and/or oxygen atom, the above chain hydrocarbon group which contains an aromatic group, or alicyclic hydrocarbon group of 5 to 8 carbon atoms;
B is a chain hydrocarbon group of 1 to 3 carbon atoms, which may contain sulfur and/or oxygen atom;
A and B may be the same or different;
R₁, R₂ and R₃ are each a hydrocarbon, alkylol or aldehyde group of 1 to 3 carbon atoms, which may be the same or different; "p", "q" and "r" are each an integer of 0 to 3, which may be the same or different;
X is a halogen atom; "s", "t" and "u" are each 0 or 1, which may be the same or different;
"x", "y" and "z" are each an integer of 1 to 3, which may be the same or different; and
"n" is a numeral of 0 to 200).

The first aspect of the present invention relates to a vibration damping composition whose matrix material of organic polymer contains a phenol-based compound represented by the general formula (I) as a vibration damping agent, and the second aspect relates to a vibration damping composition which comprises (1) an organic polymer as the matrix material, (2) phenol-based compound represented by the general formula (I) as a vibration damping agent, and (3) inorganic and/or organic filler. The present invention includes the following vibration damping compositions 1) to 8) as the preferred embodiments:
1) the above-described vibration damping composition, which is used as a master batch and diluted with an organic polymer other than that for the vibration damping composition,
2) the above-described vibration damping composition, wherein the vibration damping agent is a bisphenol-based compound having methyl group at a site adjacent to the hydroxyl group,
3) the above-described vibration damping composition, wherein the phenol-based compound has a melting point of 100°C or higher,
4) the above-described vibration damping composition, wherein the phenol-based compound has a molecular weight of 200 or more,
5) the above-described vibration damping composition, wherein the organic filler is sorbitol and/or a fluoropolyolefin,
6) the above-described vibration damping composition, wherein the vibration damping agent (a) and inorganic and/or organic filler (b) are incorporated in an (a):(b) ratio of 1:0.1 to 1:5,
7) the above-described vibration damping composition, wherein the matrix material of organic polymer is acrylic rubber and/or polylactic resin, and contains, as the vibration damping agent, at least one phenol-based compound selected from the group consisting of 2,2'-methylene-bis(4-methylphenol), 2,2'-methylene-bis(4-hydroxy-3-methylphenyl)propane and 1,1'-bis(4-hydroxyphenyl)cyclohexane at 5 to 60% by weight, and
8) the above-described vibration damping composition, wherein the matrix material of organic polymer is acrylic rubber and/or polylactic resin, and contains, as the vibration damping agent, at least one phenol-based compound selected from the group consisting of 2,2'-methylenebis(4-methylphenol), 2,2'-methylene-bis(4-hydroxy-3-methylphenyl)propane and 1,1'-bis(4-hydroxyphenyl)cyclohexane at 5 to 60% by weight, sorbitol and/or fluoropolyolefin at 1 to 20% by weight, and mica at 1 to 50% by weight.

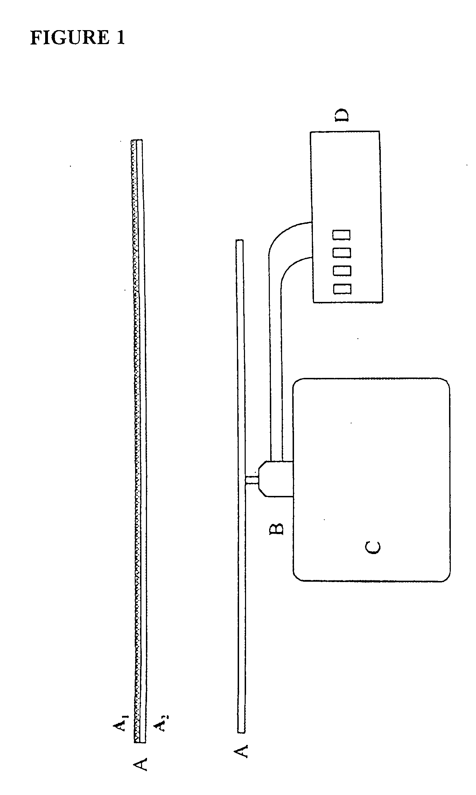

FIG. 1 shows an apparatus for evaluating loss factor (η) of the vibration damping material composition, wherein A: test piece, A₁: sample (sheet of vibration damping material), A₂: base, B: impedance head, C: vibrator, and D: transfer function analyzer (PC for FFT analysis).

The present invention is described in more detail.

The organic polymer useful as the constituent of the vibration damping material for the present invention and working as the matrix for the vibration damping agent is not limited, so long as it has a given molecular weight and melting point, and a polar side chain. More specifically, the organic polymers useful for the present invention include acrylic rubber, butyl rubber, chloroprene, SBR (styrene/butadiene rubber), thermoplastic elastomer (e.g., ethylene/propylene rubber), polylactic resin to begin with, polyurethane resin, polyacrylate resin, polyepoxy resin, polycarbonate resin, polyester resin, polyether resin, polyvinyl acetate resin, ethylene/vinyl acetate copolymer, styrene/vinylacetate copolymer, ethylene/vinyl chloride copolymer, polyacetal resin, ethylene/methacrylate copolymer, acrylonitrile/styrene copolymer, acrylonitrile/butadiene/styrene copolymer, and chlorinated polyolefins, e.g., chlorinated polyethylene, polypropylene and polybutylene.

The organic polymer for the present invention may be optionally selected from the above compounds according to specific purposes of the vibration damping material. However, preferably it has the polar group interactive with the vibration damping agent and is effective for environmental preservation. These organic polymers include acrylic rubber, ethylene/acrylate copolymer, acrylate/methacrylate copolymer, acrylate/polystyrene copolymer, polyvinyl acetate resin, styrene/vinylacetate copolymer, ethylene/vinyl acetate copolymer, polycarbonate resin and polylactic resin. The more preferable organic polymers for the present invention are acrylate/methacrylate copolymer, acrylic rubber, and polylactic resin and its mixture with polyacrylate resin.

Acrylic rubber is a rubber-like elastomer, which is a polymer of acrylate ester or copolymer with acrylate ester as a major component. The acrylate esters include methyl acrylate, ethyl acrylate, butyl acrylate and hexyl acrylate; and the monomers to be copolymerized with an acrylate ester include methyl vinyl ketone, acrylic acid, acrylonitrile, butadiene and methyl methacrylate.

Polylactic resin is normally produced by ring-opening polymerization of lactide, which is produced by dehydration/polycondensation of lactic acid and depolymerization of the resultant lactic acid oligomer. Polylactic resin, which may be fabricated by a variety of processes, is useful for coping with environmental protection, because of its high bio-degradability.

Polylactic acid having a weight-average molecular weight of 200,000 to 1,000,000, preferably 300,000 to 800,000, can be used for the present invention. It preferably has a melting point of 150°C or higher. Particularly preferably, it is incorporated with a polysaccharide (e.g., cellulose or starch) or another additive at 10 to 50% by weight for fabricability.

Polyurethane resin has the urethane bond -NHCOO- in the recurring unit in the main chain. Normally, the one produced by polyaddition of an organic diisocyanate and high-molecular-weight diol can be used for the present invention. The organic diisocyanates useful for the present invention include 4,4'-diphenylmethane diisocyanate, p-phenylene diisocyanate, tolylene diisocyanate and 4,4'-cyclohexylmethane diisocyanate, which are normally used as starting compounds for production of polyurethane. The high-molecular-weight diols and triols useful for the present invention are not limited, and the polyether type ones, e.g., polyoxypropylene glycol and polyoxypropylene-polyoxyethylene glycol, may be used. The polyurethane resin as the preferable matrix material of organic polymer contains a high-molecular-weight diol having an average molecular weight of 500 to 10,000, particularly preferably 1,000 to 7,000.

Of the various polymers cited above as the ones useful for the present invention as the matrix materials of organic polymer for the vibration damping material, acrylate/methyl methacrylate-based resin, acrylic rubber, polylactic resin and a mixture of acrylic rubber and polylactic resin are more preferable. The preferable mixture which can be used for the present invention is composed of acrylic rubber (A) and polylactic resin (B) in an (A): (B) ratio of (10 to 90):(90:10) by weight, preferably (15 to 35):(85:65).

As the organic polymer for the matrix, a resin emulsion or the one produced via a resin emulsion may be used. One example of such a resin emulsion comprises the resin dispersed in water or another solvent or emulsified. The aqueous emulsion produced with water is preferable for environmental protection. Moreover, it is produced by a simple procedure, and can give a coating film of uniform quality. The solid content of the resin emulsion can be optionally set. However, it is preferably 20 to 80% by weight, particularly preferably 35 to 65%. The resin in the emulsion has an average particle size of 0.01 to 50µm, particularly preferably 0.1 to 10 µm.

When the vibration damping material composition is to be used for sheet-shaped formed articles, the organic polymer matrix for the composition has a function of stabilizing the sheet-shaped formed article and also a function as the diluent for the master batch of the vibration damping agent. The polymers described above can make the matrix which is required to have the above characteristics.

Next, the vibration damping agent as one of the constituents for the vibration damping material composition of the present invention is a phenol-based compound represented by the general formula (I):

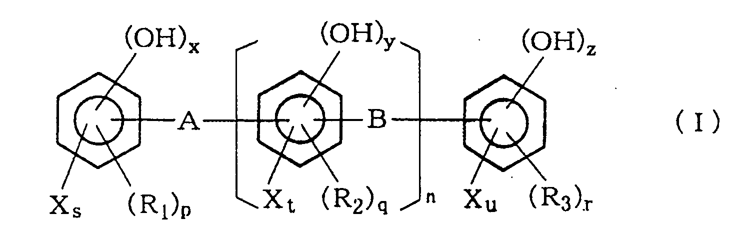

The compounds represented by the general formula (I) include a less hindered type, i.e., less steric hindrance type, phenol-based compound. It is found that such a less hindered type phenol-based compound shows greatly accelerated interactions with the matrix material of organic polymer, thereby bringing the vibration damping functions/effects of higher maximum loss tangent (tanδ) and wider serviceable temperature range than those by a hindered type phenol-based compound.

The general formula (I) discloses the compounds having at least 2 phenol rings, and also discloses that these compounds include high-molecular-weight compounds with the phenol rings bonded by the bonding group A or B described above.

In the general formula (I), A is a short-chain hydrocarbon group, i.e., a chain hydrocarbon group of 1 to 3 carbon atoms which may contain sulfur and/or oxygen atom. The chain hydrocarbon group is divalent, e.g., methylene, ethylene, propylene and isopropylene group. These groups also include the hydrocarbon group to which an aromatic group is bonded, e.g., methylene group to which phenyl group is bonded: 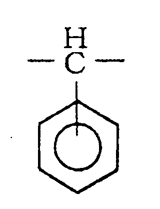 and the hydrocarbon group to which an aromatic group having hydroxyl group is bonded, e.g., methylene group having phenol group. 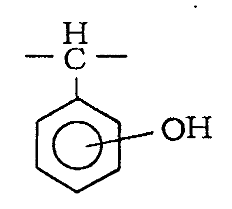 Moreover, A may be also an alicyclic hydrocarbon group of 5 to 8 carbon atoms, e.g., cyclohexyl group:

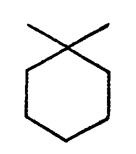

In the general formula (I), B is a chain hydrocarbon group of 1 to 3 carbon atoms, which may contain sulfur and/or oxygen atom. More specifically, the group is divalent, e.g., methylene, ethylene, propylene and isopropylene group. A and B may be the same or different.

In the general formula (I), R₁, R₂ and R₃ are each a hydrocarbon, alkylol or aldehyde group of 3 or less carbon atoms. More specifically, the hydrocarbon group is an alkyl group selected from the group consisting of methyl, ethyl, propyl and isopropyl group, alkylol group is, e.g., methylol or ethylol, and aldehyde group is, e.g., formyl. R₁, R₂ and R₃ may be the same or different. Each of "p", "q" and "r", representing number of bonds to the aromatic ring, is an integer of 0 to 3, preferably 1 or 2. They may be the same or different.

The site at which R₁, R₂ or R₃ is bonded to the aromatic ring may be optionally set, so long as the less hindered type phenol-based compound results. However, it is preferable that each of R₁, R₂ and R₃ does not simultaneously occupy both sites adjacent to the hydroxyl group.

X is a halogen atom, and "s", "t" and "u" are each 0 or 1, which may be the same or different. The halogen atoms include chlorine and bromine, the former being more preferable.

Each of "x", "y" and "z", representing number of hydroxyl group bonded to the aromatic ring, is an integer of 0 to 3, which may be the same or different.
"n", representing recurring number of the recurring unit, 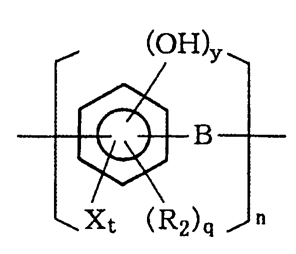 is a numeral of 0 to 200, by which is meant that a high-molecular-weight compound may be used for the vibration damping agent. Normally, the compound with "n" of 0 to 10 is used. However, the one with "n" exceeding 10 can exhibit a function as the organic polymer matrix for the vibration damping material for the present invention, in addition to a function as the vibration damping agent.

Those compounds, represented by the general formula (I), exhibiting the notable vibration damping effect include:
2,2'-methylene-bis(4-methylphenol);
2,2'-methylene-bis(4-ethylphenol);
2,2'-methylene-bis(4-propylphenol);
2,2'-methylene-bis(4-chlorophenol);
4,4'-methylene-bis(2,5-dimethylphenol);
4,4'-methylene-bis(2-methyl-5-ethylphenol);
4,4'-methylene-bis(2-methyl-5-propylphenol);
2,6-bis(2-hydroxy-5-methylphenol)-4-methylphenol;
2,2'-bis(4-hydroxy-3-methylphenyl)propane;
1,1'-bis(4-hydroxyphenyl)cyclohexane;
α,α'(4-hydroxyphenyl)-1,4-diisopropyl benzene;
bis(2-hydroxy-3-hydroxymethyl-5-methylphenyl)methane;
bis(4-hydroxy-3-hydroxymethyl-5-methylphenyl)methane;
bis(3-formyl-4-hydroxy-2-methylphenyl)methane;
bis(4,5-dihydroxy-2-methylphenyl)phenylmethane;
bis(4-hydroxy-3-methylphenyl)-2-hydroxyphenylmethane;
bis[4-hydroxy-3-(2-hydroxy-5-methylbenzyl)-5-methylphenyl)methane;
1,1,2,2-tetrakis(4-hydroxyphenyl)ethane;
a,a,a',a'-tetrakis(4-hydroxyphenyl)-p-xylene; and
2,2'-bis[4-hydroxy-3,5-bis(2-hydroxy-5-methylbenzyl)-phenyl]propane.

Of these compounds, which can be cited as the phenol-based compounds useful for the vibration damping agent for the vibration damping material composition of the present invention, the particularly preferable ones are:
2,2'-methylene-bis(4-methylphenol);
2,2'-methylene-bis(4-ethylphenol);
2,2'-methylene-bis(4-propylphenol);
2,2'-methylene-bis(4-chlorophenol);
4,4'-methylene-bis(2,5-dimethylphenol);
4,4'-methylene-bis(2-methyl-5-ethylphenol);
4,4'-methylene-bis(2-methyl-5-propylphenol);
2,6-bis(2-hydroxy-5-methylphenol)-4-methylphenol;
2,2'-bis(4-hydroxy-3-methylphenyl)propane;
1,1'-bis(4-hydroxyphenyl)cyclohexane; and
α,α'(4-hydroxyphenyl)-1,4-diisopropyl benzene.

Still more preferable phenol-based compounds are:
2,2'-methylene-bis(4-methylphenol);
2,2'-methylene-bis(4-propylphenol);
2,2'-bis(4-hydroxy-3-methylphenyl)propane; and
1,1'-bis(4-hydroxyphenyl)cyclohexane.

In further, 2,2'-bis(4-hydroxy-3-methylphenyl)propane is especially preferable.

These phenol-based compounds bring a very notable vibration damping effect as vibration damping agents over a wide temperature range. They can be produced without needing a sophisticated process and hence at a low cost, because of their relatively simple chemical structures, thereby greatly contributing to the industry.

The vibration damping agent can be incorporated at 5 to 70% by weight of the whole vibration damping material composition, preferably 10 to 60%, more preferably 15 to 50%. At below 5%, it may not produce the desired vibration damping effect. At above 70%, on the other hand, it may cause phase separation from the matrix material of organic polymer.

The vibration damping material composition of the present invention may be supplied as a master batch which contains the vibration damping agent at a high concentration, and diluted before being used. In this case, the base polymer may contain the polar group described earlier. The resin as the diluent may be selected from those other than the base polymer, e.g., a polyolefin lacking a polar group. It may be optionally selected depending on specific purposes of the composition.

Next, the filler as the constituent component of the vibration damping material composition is described. The filler type is not limited, so long as it strongly interacts with the organic polymer matrix. It may be inorganic, carbon-based or organic and piezoelectricity materials.

The inorganic fillers useful for the present invention include layered compounds containing SiO₂, Al₂O₃, MgO, Na₂O or the like, e.g., saponite, smectite, montmorillonite, vermiculite, xonotlite, mica, powdered stainless steel, tourmaline, BaTiO₃ and PbTiZrO₃; and talc, calcium carbonate, natural and synthetic zeolite, mesoporous zeolite and flaky silica. The carbon-based fillers useful for the present invention include Ketjen's black carbon and flaky graphite.

The inorganic filler is particularly preferably basic, when the organic polymer is acidic. The basic inorganic fillers useful for the present invention include TiO₂, MgO, CaO and talc. A layered silicate clay mineral may be also used as the acidic inorganic filler. Such a mineral is preferably of 2:1 type, in particular the one having a relatively large basal plane distance, i.e., relatively large unit structure thickness or cycle in the direction perpendicular to the layer plane, e.g., the one having the distance of around 14 to 15Å or more. Specifically, those useful for the present invention include smectite, montmorillonite, saponite, vermiculite and a mixture thereof, in addition to mica.

The organic fillers useful for the present invention include dibenzylidene sorbitol, tetrafluoropolyethylene, gelol D, powdered cellulose, non-woven fabric, wood chips, sugar, paper, cellulose and FRP and liquid crystal polymer materials. Preferable liquid crystal polymers include an aromatic polyester, aromatic polyester amide and relating compounds. For example, as a commercially-available organic filler POLYARYLATE® fiber can be used.

As the piezoelectricity materials mentioned above, these are not limited but, barium titanate powder, polyamide, polyvinylidene fluoride, glassy carbon are preferable.

A combination of the inorganic and organic fillers can significantly expand a temperature region in which loss factor (η) can be kept at a high level. The inorganic or organic filler is preferably used in the form of fine particles, in particular flakes, or fibers. Those having an average particle diameter of 1 to 200µm, in particular 40 to 100 µm, will greatly contribute to vibration and sound absorption.

In particular, a combination of the phenol-based compound partly substituted by the organic filler, organic filler and inorganic filler brings a notable effect of achieving a high loss factor (η) over a wide temperature range, in particular high temperature range.

The filler (inorganic or organic filler, or a combination thereof) is incorporated at 2 to 70% by weight of the whole vibration damping material composition, preferably 20 to 50%. At below 2%, it may not sufficiently improve the vibration absorption performance. At above 70%, on the other hand, it may cause problems, e.g., phase separation which deteriorates composition strength, with the result that the composition may be difficult to keep sufficient strength. In particular, the organic filler, when used, is incorporated preferably at 2 to 30% by weight, particularly preferably 5 to 20%.

The preferable contents of the matrix material of organic polymer (a), phenol-based compound (b) and inorganic and/or organic filler (c) components of the vibration damping material composition of the present invention are (a): 50 to 50%, preferably 10 to 40%, (b): 5 to 60%, preferably 10 to 40%, and (c): 2 to 70%, preferably 10 to 60%, all percentages being by weight.

The organic or inorganic filler may be used as a master batch of the resin composition with a base resin and the vibration damping agent, as is the case with the vibration damping agent.
In the vibration damping material composition of the present invention, the base resin as the organic polymer may be further incorporated, as required, with another organic polymer, depending on specific purposes of the composition. These organic polymers, other than those used for the base resin, useful for the present invention include melamine resin, phenol resin, polyethylene terephthalate, polycarbonate and polyolefin.

Moreover, the vibration damping material composition of the present invention may be further incorporated with one or more other additives, e.g., lubricant, ageing inhibitor and foaming agent.
The vibration damping materials of the present invention are used in the form of fibers, granules, particles or the like. Any form may be used for the machines and tools, buildings or the like which need vibration damping and for which it is used. It is particularly preferably used in the form of sheet-shape formed article. Its thickness can be optionally set for specific purposes and required performance. However, it is preferably 0.05 to 7mm, particularly preferably 1 to 4mm.
The vibration damping material composition of the present invention may be also supplied in the form of coating material for all types of structures, e.g., buildings, machines and tools, and transportation equipment which need vibration damping.

The sheet-shape formed article may be applied to one or more planes which need vibration damping after being placed in one or more spaces between layers of a laminate or pressed to the surface.

The vibration damping material composition of the present invention may be also supplied in the form of liquid, e.g., coating material. It brings a vibration damping function after being spread in a space between a laminate or on its surface.

The process for producing the vibration damping material composition of the present invention described above is not limited. For production of the sheet-shape formed article and coating material, the following processes may be used. The specific process conditions can be selected depending on, e.g., starting materials and specific purposes of the composition.

### (1) Sheet-shape formed article

Particles of the organic polymer (a) and vibration damping agent (b), or those of the organic polymer (a), vibration damping agent (b) and organic and/or inorganic filler (c) in a given ratio are kneaded at normal temperature or higher, and formed into a sheet shape by pressing or stretching under the temperature/pressure conditions needed for pressing the mixture, e.g., 60 to 300°C, preferably 100 to 200°C, and 100 to 300kgf/cm², preferably 150 to 250kgf/cm².

### (2) Coating material

The coating solution containing an emulsion of the organic polymer (a) dispersed/mixed with the vibration damping agent (b), or an emulsion of the organic polymer (a) dispersed/mixed with the vibration damping agent (b) and organic and/or inorganic filler (c) is prepared. The mixing ratio of each starting material for the coating material may be adjusted to obtain the vibration damping material composition.

### EXAMPLES

The present invention is described in more detail by EXAMPLES and COMPARATIVE EXAMPLES, which by no means limit the present invention.
Loss tangent (tanδ) of the vibration damping material composition prepared in each of EXAMPLES and COMPARATIVE EXAMPLES was measured by a dynamic viscoelasticity tester (IT Measurement Control Co's DVA-200S) in a temperature range from -50 to 100°C at a frequency of 50Hz and heating rate of 5°C/minute in a tensile mode with a dynamic strain of 0.1%. The test piece was around 20mml×5mmw×1mmt in size.

Loss factor (η) was measured by the central vibration method in accordance with JIS G-0602 (1993) using an evaluation apparatus illustrated in FIG.1, where A: test sample comprising the sheet A₁ of vibration damping material bonded to the cold-rolled steel sheet A₂ as the base, B: impedance head, C: vibrator, and D: analyzer (for measuring loss factor (η) from the resonance peak by the half-width method, after it was Fourier-transformed by a modal analysis software). The base size was 200mml×10mmw×0.8mmt, and the sample was adjusted to have a sample surface density of 2kg/m².

### EXAMPLES 1 to 6

A vibration damping material composition was prepared in each of EXAMPLES 1 to 6, wherein 100 parts by weight of acrylic rubber as the matrix material of organic polymer (hereinafter referred to as Polymer Matrix) was incorporated with a phenol-based compound given in Table 1 as the vibration damping agent in a quantity also given in Table 1. Each mixture was hot-pressed at 200°C and 200kgf/cm² for 20 minutes, to be formed into a 1mm thick sheet-shape vibration damping material composition.

Its max. loss tangent (tanδ) and temperature region in which tanδ was kept at above 1 were measured by the procedures described above. The results are given in Table 1.

**Table 1**

| | EXAMPLES | | | | | |
|---|---|---|---|---|---|---|
| | 1 | 2 | 3 | 4 | 5 | 6 |
| Polymer matrix | | | | | | |
| Acrylic rubber ^{Note 1)} | 100 | 100 | 100 | 100 | 100 | |
| Polylactic resin ^{Note 2)} | - | - | - | - | - | 100 |

| Phenol-based compound | | | | | | |
|---|---|---|---|---|---|---|
| PH1 ^{Note 3)} | 80 | | | | | |
| PH4 ^{Note 4)} | | 80 | | | | |
| PH10 ^{Note 5)} | | | 80 | | | |
| PH9 ^{Note 6)} | | | | 80 | | 80 |
| PH21 ^{Note 7)} | | | | | 80 | |
| Max. tanδ | 3.6 | 3.5 | 3.5 | 3.9 | 4.1 | 3.5 |
| | | | | | | |
| Temperature region in which tanδ is kept at above 1, °C | 40∼1 | 30∼-5 | 52∼15 | 50∼17 | 47∼10 | 68∼46 |
| | | | | | | |
| Temperature range, °C | 39 | 35 | 37 | 33 | 37 | 22 |

| | | | | | | |
|---|---|---|---|---|---|---|
| Note 1) Acrylic rubber (Nippon Zeon Corp.'s A R32) | | | | | | |
| Note 2) Polylactic resin (Shimadzu Corp.'s Lacty 5000) | | | | | | |
| Note 3) PH1: 2,2'-Methylenebis(4-methylphenol) (Tokyo Kasei Kogyo's M1134) | | | | | | |
| Note 4) PH4: 2,2'-Methylenebis(4-chlorophenol) (Tokyo Kasei Kogyo's M213) | | | | | | |
| Note 5) PH10: 1,1'-Bis(4-chlorophenol) (Tokyo Kasei Kogyo's B1568) | | | | | | |
| Note 6) PH9: 2,2'-Bis(4-hydroxy-3-methylphenyl)propane (Tokyo Kasei Kogyo's B1567) | | | | | | |
| Note 7) PH21: α,α'(4-hydroxyphenyl)-1,4-diisopropylbenzene (Tokyo Kasei Kogyo's B1563) | | | | | | |

### COMPARATIVE EXAMPLE 1

A vibration damping composition was prepared using the same starting materials and under the same conditions as in EXAMPLE 1, except that the vibration damping agent was replaced by 2,2-methylenebis(4-methyl-6-t-butylphenol), which is a hindered phenol-based compound. The evaluation results are given in Table 2.

### COMPARATIVE EXAMPLE 2

A vibration damping composition was prepared using the same starting materials and under the same conditions as in COMPARATIVE EXAMPLE 1, except that no vibration damping agent was used. The evaluation results are given in Table 2.

### COMPARATIVE EXAMPLE 3

A vibration damping composition was prepared using the same starting materials and under the same conditions as in COMPARATIVE EXAMPLE 2, except that acrylic rubber was replaced by polylactic resin as the organic polymer. The evaluation results are given in Table 2.

**Table 2**

| | COMPARATIVE EXAMPLES | | |
|---|---|---|---|
| | 1 | 2 | 3 |
| Polymer matrix | | | |
| Acrylic rubber ^{Note 1)} | 100 | 100 | |
| Polylactic resin ^{Note 2)} | | | 100 |

| Phenol-based compound | | | |
|---|---|---|---|
| PH101 ^{Note 3)} | 80 | 0 | 0 |
| Max. tanδ | 3.4 | 2.5 | 2.0 |
| Temperature region in which tanδ is kept at above 1, °C | 31∼11 | 2∼-21 | 79∼66 |
| Temperature range, °C | 20 | 23 | 13 |

| | | | |
|---|---|---|---|
| Note 1) Acrylic rubber (Nippon Zeon Corp.'s A R32) | | | |
| Note 2) Polylactic resin (Shimadzu Corp.'s Lacty 5000) | | | |
| Note 3) PH101: Methylenebis(4-methyl-6-t-butylphenol) (Ouchishinko Chemical Industrial's NS6) | | | |

### EXAMPLES 11 to 18

A vibration damping material composition was prepared in each of EXAMPLES 11 to 18, wherein acrylic rubber as the matrix material of organic polymer, a phenol-based compound, and inorganic and organic filler, all given in Table 3 were mixed with each other in a ratio also given in Table 3. The evaluation results are given in Table 3.

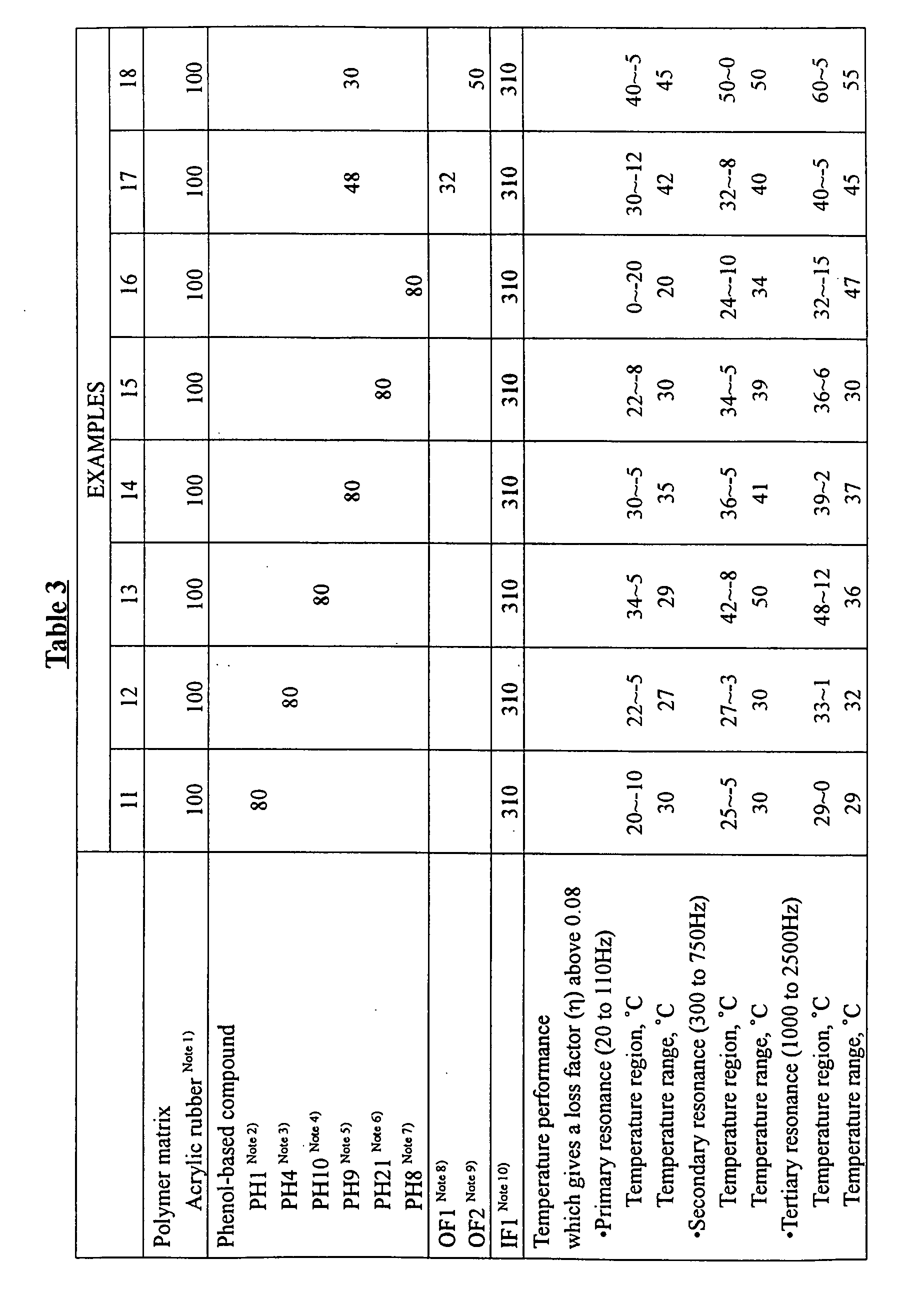

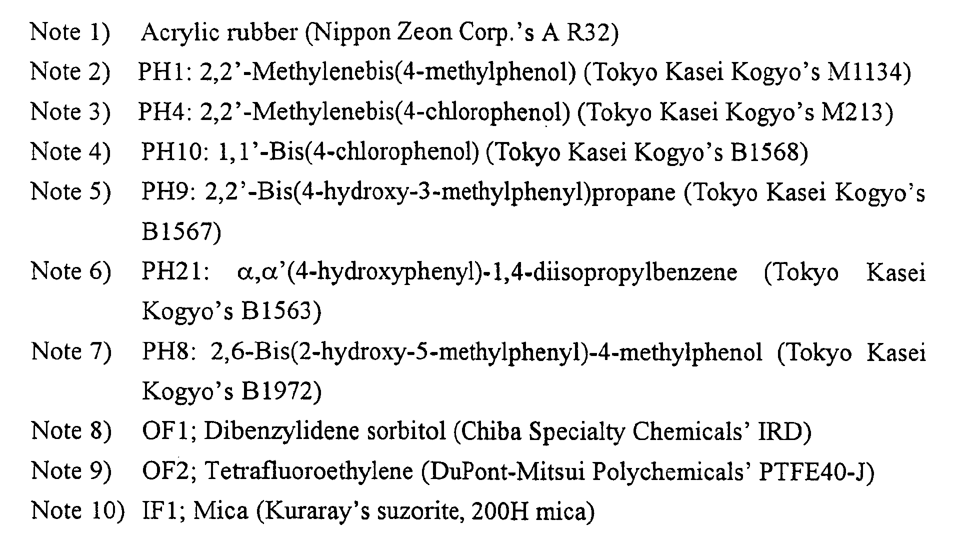

### EXAMPLE 19

A vibration damping material composition was prepared using the same starting materials and under the same conditions as in EXAMPLE 11, except that acrylic rubber was replaced by a 80/20 mixture of acrylic rubber and polycarbonate. The evaluation results are given in Table 4.

### EXAMPLES 20-23

A vibration damping material composition was prepared in each of EXAMPLES 20-23, wherein polystyrene rubber-acrylic rubber or polystyrene rubber-ethylene-vinylacetate as the matrix material of organic polymer, a phenol-based compound, and inorganic and organic fillers, all given in Table 4, were mixed with each other in a ratio also given in Table4. The evaluation results are given in Table 4.

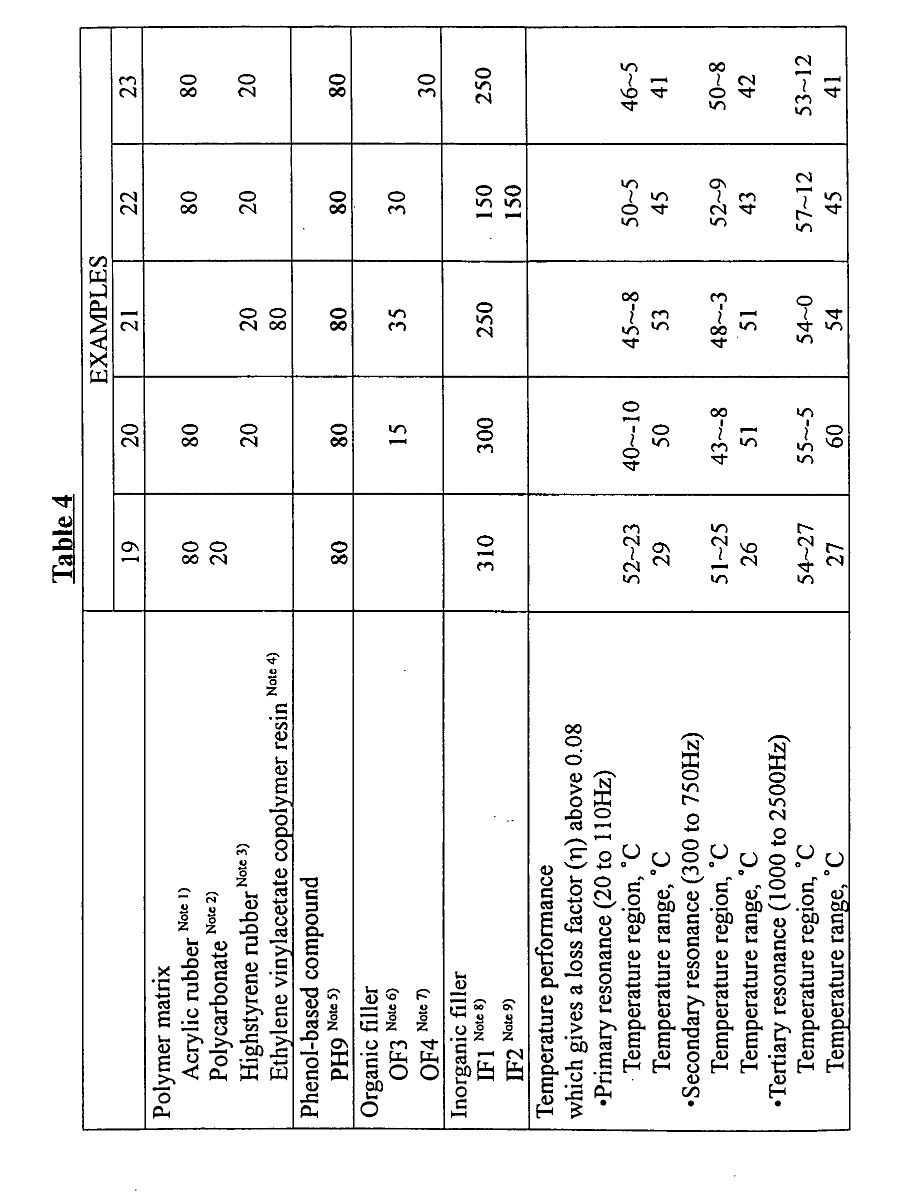

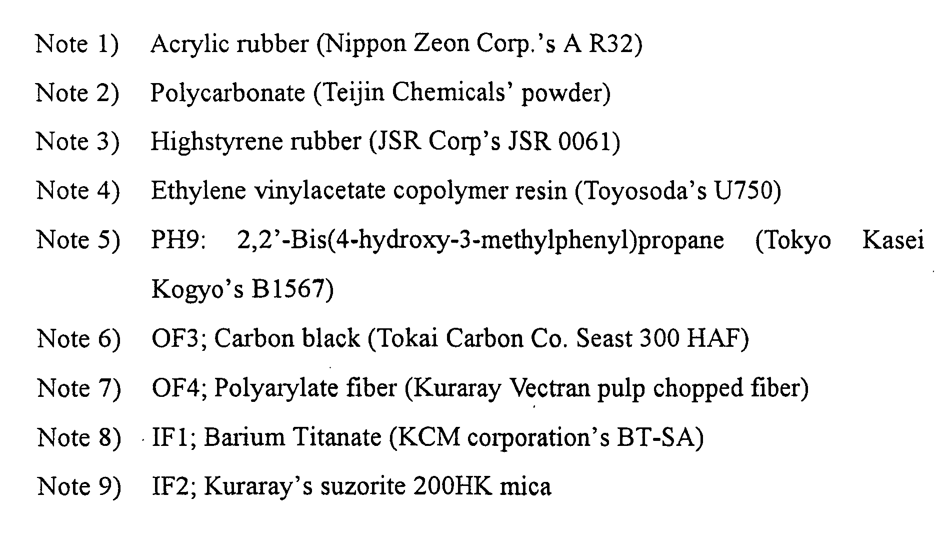

### COMPARATIVE EXAMPLE 21

A vibration damping composition was prepared using the same starting materials and under the same conditions as in EXAMPLE 11, except that 2,2'-methylenebis(4-methylphenol) was replaced by 2,2'-methylenebis(4-methyl-6-t-butylphenol). The evaluation results are given in Table 5.

### COMPARATIVE EXAMPLE 22

Performance of only the organic polymer matrix was evaluated. The evaluation results are given in Table 5.

**Table 5**

| | COMPARATIVE EXAMPLES | |
|---|---|---|
| | 21 | 22 |
| Polymer matrix | | |
| Acrylic rubber ^{Note 1)} | 100 | 100 |

| Phenol-based compound | | |
|---|---|---|
| PH101 ^{Note 2)} | 80 | - |
| IF1 ^{Note 3)} | 310 | - |

| Temperature performance | | |
|---|---|---|
| which gives a loss factor (η) above 0.08 | | |
| •Primary resonance (20 to 110Hz) | | |
| Temperature region, °C | 29∼9 | - |
| Temperature range, °C | 20 | 0 |
| •Secondary resonance (300 to 750Hz) | | |
| Temperature region, °C | 33∼11 | - |
| Temperature range, °C | 22 | 0 |
| •Tertiary resonance (1000 to 2500Hz) | | |
| Temperature region, °C | 40∼15 | - |
| Temperature range, °C | 25 | 0 |

| | | |
|---|---|---|
| Note 1) Acrylic rubber (Nippon Zeon Corp.'s A R32) | | |
| Note 2) PH101; Methylene-bis(4-methyl-6-t-butylphenol) (Ouchishinko Chemical Industrial's NS6) | | |
| Note 3) IF1;Mica (Kuraray's suzorite 200HK mica) | | |

The present invention can provide a vibration damping material composition having, as described above, a high max. loss tangent (tanδ) and a wide temperature range extending from normal temperature to high temperature in which tanδ is kept at above 1, because it comprises an organic polymer matrix (a) and vibration damping agent (b). The present invention also can provide a vibration damping material composition having a high loss factor (η), because it comprises an organic polymer matrix (a), vibration damping agent (b) and organic and/or inorganic filler (c). Moreover, the present invention also can provide a vibration damping material composition improved both in max. loss tangent (tanδ) and loss factor (η), bringing a much greater vibration damping effect than the one incorporated with the known vibration damping agent.

## Claims

1. A vibration damping composition whose matrix material of organic polymer contains a vibration damping agent, wherein the vibration damping agent is a phenol-based compound represented by the general formula (I): 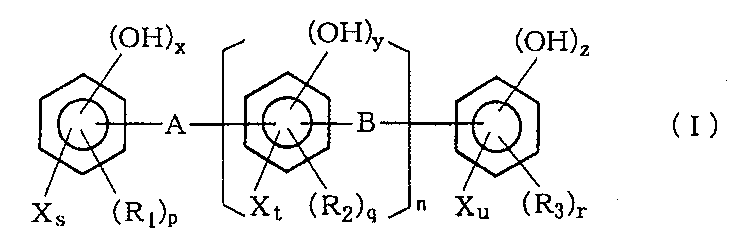 (wherein,
A is a chain hydrocarbon group of 1 to 3 carbon atoms, which may contain sulfur and/or oxygen atom, the above chain hydrocarbon group which contains an aromatic group, or alicyclic hydrocarbon group of 5 to 8 carbon atoms;
B is a chain hydrocarbon group of 1 to 3 carbon atoms, which may contain sulfur and/or oxygen atom;
A and B may be the same or different;
R₁, R₂ and R₃ are each a hydrocarbon, alkylol or aldehyde group of 1 to 3 carbon atoms, which may be the same or different; "p", "q" and "r" are each an integer of 0 to 3, which may be the same or different;
X is a halogen atom; "s", "t" and "u" are each 0 or 1, which may be the same or different;
"x", "y" and "z" are each an integer of 1 to 3, which may be the same or different; and
"n" is a numeral of 0 to 200).

2. A vibration damping composition whose matrix material of organic polymer contains a vibration damping agent, and inorganic and/or organic filler, wherein the vibration damping agent is a phenol-based compound represented by the general formula (I): 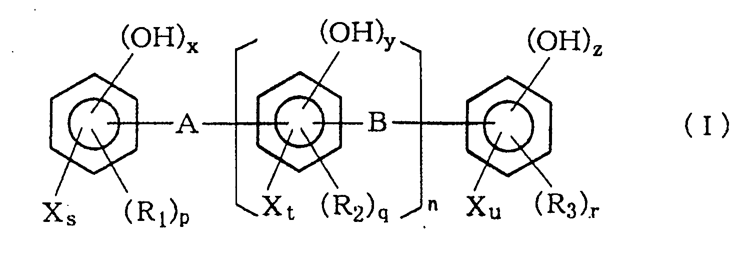 (wherein,
A is a chain hydrocarbon group of 1 to 3 carbon atoms, which may contain sulfur and/or oxygen atom, the above chain hydrocarbon group which contains an aromatic group, or alicyclic hydrocarbon group of 5 to 8 carbon atoms;
B is a chain hydrocarbon group of 1 to 3 carbon atoms, which may contain sulfur and/or oxygen atom;
A and B may be the same or different;
R₁, R₂ and R₃ are each a hydrocarbon, alkylol or aldehyde group of 1 to 3 carbon atoms, which may be the same or different; "p", "q" and "r" are each an integer of 0 to 3, which may be the same or different;
X is a halogen atom; "s", "t" and "u" are each 0 or 1, which may be the same or different;
"x", "y" and "z" are each an integer of 1 to 3, which may be the same or different; and
"n" is a numeral of 0 to 200).

3. The vibration damping composition according to Claim 1 or 2, wherein said matrix material of organic polymer is at least one high-molecular-weight compound selected from the group consisting of vinyl acetate-based resin, ethylene/vinyl acetate-based resin, polystyrene/vinylacetate resin, epoxy-based resin, alkyd-based resin, polyester-based resin, polyurethane-based resin, polycarbonate-based resin, polylactic-based resin, polyether-based resin, polyacetal resin, ethylene/methacrylate-based resin, acrylate/methacrylate-based resin, acrylate/polystyrene-based resin, acrylonitrile/styrene-based copolymer, acrylonitrile/butadiene/styrene-based copolymer, acrylic rubber, butyl rubber, halogenated polyolefin, polyethylene and polypropylene.

4. The vibration damping composition according to Claim 1 or 2, wherein said matrix material of organic polymer is acrylic rubber and/or acrylate/methacrylate-based resin.

5. The vibration damping composition according to Claim 1 or 2, wherein said matrix material is polylactic resin or a mixture of polylactic acid resin and acrylic rubber.

6. The vibration damping composition according to Claim 1 or 2, wherein said matrix material is acrylic rubber and/or a mixture of 10 to 40% of acrylate/methacrylate-based resin and 90 to 60% of polylactic resin.

7. The vibration damping composition according to Claim 1 or 2, wherein the starting material for said matrix material of organic polymer is an aqueous resin emulsion.

8. The vibration damping composition according to anyone of claims 1 to 7, wherein said vibration damping agent is a phenol-based compound of limited steric hindrance which has a chemical composition free of a branched hydrocarbon group of 4 or more carbon atoms at each site adjacent to the hydroxyl group.

9. The vibration damping composition according to anyone of claims 1 to 8, wherein A and B in the general formula (I) representing said vibration damping agent is a chain hydrocarbon group bonded to the 2- or 4-site of the hydroxyl group.

10. The vibration damping composition according to anyone of claims 1 to 9, wherein R₁, R₂ and R₃ in the general formula (I) are each bonded to at least one site selected from the group consisting of the 2-, 4- and 5-site of the hydroxyl group, each being bonded to the same or different site, provided that A or B is not bonded to that site.

11. The vibration damping composition according to anyone of the preceding claims, wherein said phenol-based compound is at least one type selected from the group consisting of
2,2'-methylene-bis(4-methylphenol);
2,2'-methylene-bis(4-ethylphenol);
2,2'-methylene-bis(4-propylphenol);
2,2'-methylene-bis(4-chlorophenol);
4,4'-methylene-bis(2,5-dimethylphenol);
4,4'-methylene-bis(2-methyl-5-ethylphenol);
4,4'-methylene-bis(2-methyl-5-propylphenol);
2,6-bis(2-hydroxy-5-methylphenol)-4-methylphenol;
2,2'-bis(4-hydroxy-3-methylphenyl)propane;
1,1'-bis(4-hydroxyphenyl)cyclohexane; and
α,α'(4-hydroxyphenyl)-1,4-diisopropyl benzene.

12. The vibration damping composition according to one of Claims 1 to 11, wherein said vibration damping agent is incorporated at 5 to 70% by weight of the whole composition.

13. The vibration damping composition according to one of Claims 2 to 11, wherein said inorganic filler is at least one type of inorganic compound selected from the group consisting of those for basic inorganic fillers, acidic inorganic fillers, and piezoelectricity materials.

14. The vibration damping composition according to anyone of claims 2 to 13, wherein said inorganic and/or organic filler is incorporated at 5 to 80% by weight of the whole composition.

15. The vibration damping composition according to anyone of claims 2 to 14, wherein said organic filler is a liquid crystal polymer material.

16. The vibration damping composition according to anyone of claims 1 to 15, which is formed into a 0.05 to 7 mm thick sheet-shape article.

17. The vibration damping composition according to anyone of claims 1 to 16, which is spread on a structure to form the coating film thereon.
